# EUROPÄISCHE PATENTANMELDUNG

(11) **EP 2 759 391 A1**
(43) Veröffentlichungstag der Anmeldung: **30.07.2014**
(21) Anmeldenummer: 13152550.3
(22) Anmeldetag: 24.01.2013
(51) Int. Cl.: B29C 45/14, B29C 45/16, B29C 45/00, E05F 3/16, F16F 7/04

(54) **Rotationsdämpfer**

(71) Anmelder: Wincor Nixdorf International GmbH, 33106 Paderborn (DE)
(72) Erfinder: Westerhorstmann, Hubertus, 33129 Delbrück (DE); Koss, Rainer, 33104 Paderborn (DE); Freitag, Paul, 32839 Steinheim (DE); Düsterhus, Richard, 33106 Paderborn (DE)
(74) Vertreter: Schröder, Christoph

(57) **Zusammenfassung**

Die vorliegende Erfindung betrifft einen Rotationsdämpfer (100) zum Dämpfen einer Relativbewegung zwischen wenigstens zwei Teilen (200, 300). Der Rotationsdämpfer weist eine Drehachse (120) sowie ein Drehelement (140) auf, wobei das Drehelement (140) auf der Drehachse drehbar und derart unter Vorspannung angeordnet ist, dass bei einer Drehung des Drehelementes um die Drehachse ein der Drehung entgegenwirkendes Drehmoment erzeugt wird. Der Rotationsdämpfer (100) zeichnet sich insbesondere dadurch aus, dass das Drehelement (140) durch ein Spritzgießverfahren auf die Drehachse (120) aufgespritzt ist.

## Beschreibung

Die vorliegende Erfindung betrifft einen Rotationsdämpfer zum Dämpfen einer Relativbewegung zwischen wenigstens zwei Teilen und ein Verfahren zum Herstellen eines Rotationsdämpfers zum Dämpfen einer Relativbewegung.

Rotationsdämpfer zum Dämpfen einer Relativbewegung zwischen zwei Teilen sind grundsätzlich bekannt. Beispielsweise beschreibt die JP 61-136358, dass bei einem Klappmechanismus eine Türklappe einen gekrümmten Führungsarm in Gestalt einer Zahnstange aufweist, der in ein an einem Türrahmen angeordnetes Zahnrad greift. Dabei ist das Zahnrad auf elastische Haltefinger aufgesteckt und dämpft ein Öffnen bzw. ein Schließen der Tür durch eine Reibung zwischen der Innenfläche des Zahnrades und der Außenfläche der elastischen Haltefinger, die gegen die Innenfläche des Zahnrades drücken. Die elastischen Haltefinger bilden damit eine Drehachse, auf der das Zahnrad drehbar und unter Vorspannung angeordnet ist, so dass bei einer Drehung des Zahnrades um die Drehachse ein der Drehung entgegen wirkendes Drehmoment erzeugt wird.

Die aus der JP 61-136358 bekannte Vorrichtung ist insoweit nachteilig, als es aufgrund der beiden Haltefinger zu einer entlang des Umfangs der Drehachse unregelmäßig verteilten Vorspannung kommt, was zu einem Verschleiß führen kann.

Bei einem anderen Rotationsdämpfer, der aus der DE 41 19 090 C2 bekannt ist, ist ein Zahnrad drehfest mit einem Rotor verbunden. Bei einer Drehbewegung des Zahnrades, die beispielsweise durch entsprechend gezahnte Führungsarme erzeugt wird, dreht sich der Rotor in einem mit einer viskosen Flüssigkeit gefüllten Gehäuse und wird durch diese Flüssigkeit gebremst. Dieser Rotationsdämpfer ist aufgrund der Vielzahl von Komponenten vergleichsweise aufwendig ausgestaltet.

Ein weiterer Rotationsdämpfer dieser Art ist beispielsweise aus der DE 10 2009 042 053 A1 bekannt.

Die der vorliegenden Erfindung zugrunde liegende Aufgabe ist es, Mittel bereitzustellen, mit denen eine sichere und kostengünstige Dämpfung einer Relativbewegung zwischen wenigstens zwei Teilen erzielt werden kann.

Gelöst wird diese Aufgabe durch einen Gegenstand gemäß einem der unabhängigen Ansprüche. Merkmale vorteilhafter Weiterbildungen sind in den Unteransprüchen angegeben.

Gemäß einem ersten Aspekt der vorliegenden Erfindung wird ein Rotationsdämpfer nach Anspruch 1 vorgeschlagen.

Durch das Aufspritzen des Drehelementes auf die Drehachse unter Verwendung eines Spritzgießverfahrens kann ein gewünschtes Drehmoment durch die Wahl der Materialien für die Drehachse und/oder für das Drehelement in einfacher Weise eingestellt werden.

Der Rotationsdämpfer gemäß der vorliegenden Erfindung weist einen vergleichsweise einfachen und robusten Aufbau auf, der kostengünstig hergestellt werden kann und gleichzeitig eine genaue Einstellung des gewünschten Drehmoments, also des gewünschten Dämpfungsgrades, erlaubt. Darüber hinaus ist der erfindungsgemäße Rotationsdämpfer wegen der wenigen Komponenten vergleichsweise leicht und wartungsarm. Aufgrund des geringen Verschleißes hat der Rotationsdämpfer eine lange Lebensdauer.

Im Wesentlichen kann der erfindungsgemäße Rotationsdämpfer aus nur zwei Komponenten, nämlich der Drehachse und dem Drehelement, durch ein Spritzgießverfahren gefertigt werden.

Bei dem Spritzgießverfahren kann es sich um ein beliebiges Spritzgießverfahren handeln, solange es dazu geeignet ist, das Drehelement derart auf der Drehachse anzuordnen, dass eine Drehbarkeit des Drehelementes um die Drehachse gewährleistet ist, also beim Aufspritzen des Drehelementes auf die Drehachse eine nicht-starre, nicht-haftende, drehbare Verbindung zwischen dem Drehelement und der Drehachse geschaffen wird.

Die Drehachse bildet in einer Variante des Rotationsdämpfers einen Teil eines beispielsweise flanschartig ausgestalteten Grundkörpers.

Ist der Grundkörper nicht aus einem Kunststoff gefertigt, sondern beispielsweise aus einem Metall, wie beispielsweise Stahl oder Aluminium, so handelt es sich bei dem Spritzgießverfahren bevorzugt um ein Umsetzverfahren, bei dem der wie auch immer gefertigte Grundkörper in eine Spritzgießform eingelegt wird und das Drehelement auf die Drehachse aufgespritzt wird.

Der Grundkörper mit der Drehachse kann auch aus einem Kunststoff gefertigt sein. In dieser Variante ist der Rotationsdämpfer bevorzugt durch ein Zweikomponentenspritzgießverfahren gefertigt, bei dem zunächst, beispielsweise im Rahmen eines ersten Schusses, der die Drehachse aufweisende Grundkörper gespritzt wird und sodann, beispielsweise im Rahmen eines zweiten Schusses, das Drehelement auf die Drehachse gespritzt wird.

Der Rotationsdämpfer gemäß der vorliegenden Erfindung kann für eine Vielzahl unterschiedlicher Anwendungen eingesetzt werden, beispielsweise zum Dämpfen einer Klappbewegung, eine Schubbewegung, eine Hubbewegung usw. Beispielsweise eignet sich der Rotationsdämpfer der vorliegenden Erfindung für einen Einsatz in einem Bargeldautomaten, Briefmarkenautomat, Kassensystem, Kopiergerät, Leergutrücknahmesystem, Möbelstück usw., insbesondere bei einer Anordnung, bei der es beispielsweise aus Service-Gründen erforderlich ist, eine Klappe, eine Tür, eine Schublade und/oder ein Modul öffnen zu können, um beispielsweise einen Papier- oder Banknotenstau zu beseitigen.

Dabei bildet ein erstes der wenigstens zwei Teile beispielsweise eine bewegliche Schublade oder Tür und ein zweites der wenigstens zwei Teile einen ortsfesten Türrahmen oder Schubladenrahmen. Der Rotationsdämpfer kann mit der Drehachse und dem darauf angeordneten Drehelement wahlweise auf dem ersten oder auf dem zweiten Teil angeordnet sein. An dem anderen Teil ist beispielsweise ein weiterer Rotationsdämpfer gemäß der vorliegenden Erfindung angeordnet, so dass die beiden Räder zum Dämpfen einer Relativbewegung zwischen den beiden Teilen aneinander gekoppelt sind, beispielsweise ineinander greifen. An dem anderen Teil kann aber auch ein Führungsarm angeordnet sein, der an das Drehelement des Rotationsdämpfers gekoppelt ist, so dass eine Relativbewegung zwischen den beiden Teilen zu einer Drehung des Drehelementes um die Drehachse führt und somit zu einer Dämpfung der Bewegung.

Die Dämpfung der Relativbewegung zwischen den wenigstens zwei Teilen wird also durch ein bei einer Drehung des Drehelementes um die Drehachse entstehendes Drehmoment erzeugt, das der Drehung entgegenwirkt. Das Drehmoment kann somit auch als Bremsmoment bezeichnet werden.

Das der Drehung entgegenwirkende Drehmoment wird auch dann erzeugt, wenn das Drehelement ortsfest angeordnet ist und die Drehachse in dem Drehelement beweglich gelagert ist. Unter einer Drehung des Drehelementes um die Drehachse kann also insbesondere auch ein Drehen der Achse bei einem Stillstand des Drehelementes verstanden werden oder eine gleichzeitig Drehung des Drehelementes und der Drehachse. In allen Fällen wird aufgrund der Vorspannung ein der jeweiligen Drehung entgegenwirkendes Drehmoment erzeugt.

Es sei ferner klargestellt, dass die Drehung des Drehelements um die Drehachse nicht notwendigerweise eine vollständige Umdrehung des Drehelements umfassen muss, damit ein der Drehung entgegenwirkendes Drehmoment erzeugt wird. Vielmehr kann dieses bei dem erfindungsgemäßen Rotationsdämpfer auch dann erzeugt werden, wenn sich das Drehelement lediglich um einen bestimmten Winkel kleiner 360° dreht. Unter dem Begriff "Drehung" ist im Rahmen der Beschreibung der vorliegenden Erfindung also eine Dreh- oder Schwenkbewegung zu verstehen. Es kommt insofern auf eine Relativbewegung zwischen dem Drehelement und der Drehachse an.

In einer Ausführungsform des Rotationsdämpfers weist das Drehelement in einem äußeren, der Drehachse abgewandten Bereich ein anderes Material auf als in einem inneren, zur Achse weisenden Bereich. Diese Ausführungsform kann vorteilhaft sein, um einerseits die Erzeugung eines gewissen Drehmoments, das der Drehung des Drehelementes um die Drehachse entgegenwirkt, zu gewährleisten und andererseits ein zweckmäßiges Ankoppeln eines der wenigstens zwei Teile an das Drehelement des Rotationsdämpfers zu ermöglichen.

Beispielsweise weist das Drehelement zum Kontaktieren eines der wenigstens zwei Teile auf einer der Drehachse abgewandten Oberfläche eine radial nach außen weisende Haftbeschichtung auf. Mittels einer solchen Haftbeschichtung kann beispielsweise ein Führungsarm das Drehelement bei einer Relativbewegung der wenigstens zwei Teile zueinander in Drehung versetzen, wodurch an der Kontaktstelle zwischen dem Führungsarm und der Haftbeschichtung des Drehelementes ein der Drehung entgegenwirkendes Drehmoment erzeugt wird. Die Haftbeschichtung kann beliebig ausgestaltet sein, solange sie eine Kontaktfläche bereitstellt, über welche eines der wenigstens zwei Teile derart an das Drehelement gekoppelt werden kann, dass es bei einer Bewegung eine Drehung des Drehelementes verursacht. Beispielsweise weist die der Drehachse abgewandte Oberfläche des Drehelementes dazu eine entsprechende Rauigkeit auf.

In einer bevorzugten Variante des Rotationsdämpfers handelt es sich bei dem Drehelement um ein Rad, wie beispielsweise ein Zahnrad, ein Nockenrad oder ein Klinkenrad. Wie oben erläutert, ist der Rotationsdämpfer an einem der wenigstens zwei Teile befestigt. In diesem Fall kann der andere Teil beispielsweise über einen Führungsarm, beispielsweise in Gestalt einer Zahnstange, an das Rad des Rotationsdämpfers gekoppelt sein. Kommt es zu einer Relativbewegung der beiden Teile zueinander, wird über eine derartige Kopplung das Rad in Drehung versetzt, so dass ein der Drehung entgegenwirkendes Drehmoment erzeugt wird.

Das Rad ist dabei durch das Spritzgießverfahren auf die Drehachse aufgespritzt.

Das Drehelement ist in einer anderen Variante des Rotationsdämpfers nicht rotationssymmetrisch, sondern hebelförmig ausgebildet, beispielsweise klinkenförmig. In dieser Variante dreht sich das Drehelement beispielsweise nicht vollständig um die Drehachse, sondern lediglich um einen bestimmten Winkel, wie beispielsweise 90°, um so eine Hebelbewegung zwischen den wenigstens zwei Teilen zu dämpfen. Das Drehelement kann auch als Nockenrad oder Klinkenrad mit einer Anzahl von nicht symmetrisch angeordneten Nocken bzw. Klinken ausgestaltet sein.

In einer bevorzugten Variante des Rotationsdämpfers handelt es sich bei dem Drehelement um ein Kunststoffdrehelement, welches durch ein entsprechendes Kunststoffspritzgießverfahren auf die Drehachse aufgespritzt ist.

In einer weiteren bevorzugten Ausführungsform besteht das Drehelement und/oder die Drehachse aus einem oder mehreren der folgenden Kunststoffe: Thermoplastisches Polyurethan, wie beispielsweise TPU 95 Shore A oder Desmopan 3072 D; Polyurethan-Elastomer, wie beispielsweise Elastollan C59 D53; Thermoplastisches Elastomer, wie beispielsweise TPE_E 55 Shore D oder TPE_E 63 Shore D; Polyamid, wie beispielsweise PA 6 GF 30.

Durch den Einsatz bestimmter Materialien kann ein Drehmoment einer gewünschten Stärke genau eingestellt werden, da das ausgewählte Drehachsenmaterial und das ausgewählte Drehelementmaterial einen zwischen Drehelement und Drehachse herrschenden Reibungskoeffizienten bzw. eine zwischen Drehelement und Drehachse herrschende Reibungszahl beeinflussen. Je höher der Reibungskoeffizient bzw. die Reibungszahl der Reibpaarung zwischen dem Drehelement und der Drehachse, desto höher ist das Drehmoment, das bei einer Drehung des Drehelementes um die Drehachse erzeugt wird und der Drehung entgegenwirkt.

Das der Drehung entgegenwirkende Drehmoment liegt beispielsweise zwischen 1 Ncm und 500 Ncm. Der betragsmäßige Wert des Drehmoments kann aber auch je nach Anwendung und Einsatzbereich durch entsprechende Materialwahl und/oder Dimensionierung des Rotationsdämpfers auch auf deutlich darüber oder darunter liegende Werte eingestellt werden.

Nachfolgend wird anhand einiger Beispiele erläutert, welchen Einfluss die Materialauswahl bei einem ansonsten jeweils unveränderten Rotationsdämpfer auf das Drehmoment hat. Grundsätzlich gilt aber, dass das Material in Abhängigkeit der gewünschten Anwendung des Rotationsdämpfers und in Abhängigkeit des gewünschten Drehmoments beliebig gewählt werden kann, und zwar sowohl für die Drehachse als auch für das Drehelement des Rotationsdämpfers.

Das Material TPU95 Shore A, also ein thermoplastisches Polyurethan der Härte 95 auf der sogenannten Shore A Härteskala, eignet sich beispielsweise zur Einstellung eines Drehmoments mittlerer Stärke, beispielsweise zwischen 7 und 21 Ncm, wobei abhängig von der Dimensionierung des Drehelementes und der Drehachse und der zwischen dem Drehelement und der Drehachse wirkenden Vorspannung auch ganz andere Drehmomentwerte erreicht werden können. Das thermoplastische Polyurethan hat den Vorteil, dass es sich um ein sehr leichtgewichtiges Material mit geringer Geräuschentwicklung und niedrigem Abnutzungserscheinungen handelt.

Das Material Elastollan C59 D53 eignet sich insbesondere zur Einstellung eines vergleichsweise schwachen Drehmoments, beispielsweise im Bereich zwischen 3 Ncm und 7 Ncm, wobei wiederum abhängig von der Dimensionierung des Drehelementes und der Drehachse und der zwischen dem Drehelement und der Drehachse wirkenden Vorspannung auch ganz andere Drehmomentwerte erreicht werden können. Unter dem Markennamen Elastollan wird im Rahmen der vorliegenden Erfindung ein thermoplastisch verarbeitbares Polyurethan-Elastomer verstanden. Zur Erzielung eines vergleichsweise schwachen Drehmoments eignet sich auch das Material Desmopan 3072 D, also ein thermoplastisches Polyurethan der Härte 3072 D, welches eine jeweils hohe mechanische Festigkeit, Abtriebsfestigkeit sowie Verschleißfestigkeit aufweist.

Zur Erzielung eines vergleichsweise großen Drehmoments kann beispielsweise das Material TPE_E55 Shore D, TPE_E63 Shore D und/oder PA 6 GF 30 eingesetzt werden, also beispielsweise ein thermoplastisches Elastomer, z.B. ein Polyester der Härte 55 bzw. 63 der Shore D Härteskala, oder ein Polyamid, z.B. ein Polyamid 6, das einen Anteil von 30% Glasfaser (GF 30) aufweist.

Bei einer bevorzugten Ausführungsform des Rotationsdämpfers ist vorgesehen, dass die Drehachse und das Drehelement durch ein Mehrkomponenten-Spritzgießverfahren hergestellt sind.

Es ist insbesondere in der oben dargestellten Variante bevorzugt, dass die Drehachse und das Drehelement aus unterschiedlichen Materialien gefertigt sind. Zum Herstellen des Rotationsdämpfers kann hier vor allem das Mehrkomponenten-Spritzgießverfahren eingesetzt werden, welches sich vorteilhaft zum Herstellen einer Verbindung von Komponenten aus verschiedenen Materialien in einem Werkzeug und einem Herstellungsschritt eignet. Auf diese Weise sind beispielsweise wenigstens teilweise formschlüssige Verbindungen zweier nicht-haftender Materialien herstellbar. Es können also zur Erzielung bestimmter Wirkungen sowie zur Erfüllung bestimmter Anwendungsanforderungen verschiedene Materialien mit verschiedenen physikalischen/chemischen Eigenschaften kombiniert werden, insbesondere um den gewünschten betragsmäßigen Wert des Drehmoments, das einer jeweiligen Drehung entgegenwirkt, einzustellen, wobei bei der Herstellung eine nicht-haftende, nicht-starre, drehbare Verbindung zwischen dem Drehelement und der Drehachse geschaffen wird. Das Drehelement des Rotationsdämpfers ist vorzugsweise derart unter Vorspannung auf der Drehachse angeordnet, dass bei einer Drehung des Drehelementes um die Drehachse ein Drehmoment erzeugt wird, das der Drehung in beide Drehrichtungen im Wesentlichen gleichsam - also mit gleicher Stärke gleichwirkend - entgegenwirkt. Je nach Anwendung kann diese Variante dazu geeignet sein, den Benutzerkomfort zu erhöhen. Es kann grundsätzlich jedoch auch vorgesehen sein, dass bei jeweils gleicher Drehgeschwindigkeit das erzeugte Drehmoment in die eine Richtung größer ist als in die andere.

Die Vorspannung wird beispielsweise durch Aufschrumpfen des Drehelementes auf die Drehachse eingestellt. Dazu wird der Rotationsdämpfer einer bestimmten Temperatur ausgesetzt, die bei entsprechender Materialwahl dazu führt, dass das Drehelement gegenüber der Drehachse schrumpft, so dass sich die Vorspannung zwischen dem Drehelement und der Drehachse erhöht. Der Grad der Vorspannung kann dabei durch den Aufschrumpfungsgrad, also insbesondere durch die Höhe der Temperatur und die Zeit, die der Rotationsdämpfer der erhöhten Temperatur ausgesetzt ist, angepasst werden.

In einer besonders bevorzugten Variante des Rotationsdämpfers weist die Drehachse zur Aufnahme des Drehelementes mindestens eine umlaufende Aussparung und mindestens einen umlaufenden, insbesondere ringförmigen Steg auf, die formschlüssig mit einer inneren Wandung einer zentralen Aussparung des Drehelementes in Eingriff stehen. Mittels des Eingriffs des Drehelementes mit einer oder mehreren Aussparungen und einem oder mehreren Stegen der Drehachse wird einerseits auch ein axialer Halt des Drehelementes an der Drehachse bewirkt, so dass das Drehelement axial nicht ohne weiteres von der Drehachse gelangen kann. Zudem wird die Oberfläche der Reibpaarung zwischen dem Drehelement und der Drehachse vergrößert, was zu einer Erhöhung des dämpfend wirkenden Drehmoments zwischen dem Drehelement und der Drehachse führt. Ist ein höheres Drehmoment gewünscht, so ist es vorteilhaft, eine Vielzahl von umlaufenden Stegen und entsprechend dazwischen liegenden Aussparungen vorzusehen. Ist hingegen ein vergleichsweise geringes Drehmoment gewünscht, das der Drehung entgegenwirkt, so kann durchaus ein einziger umlaufender Steg ausreichend sein.

Zum Einstellen des Betrags des Drehmoments, das der Drehung des Drehelementes um die Drehachse entgegenwirkt, weist der Steg in einer Variante des Rotationsdämpfers eine Anzahl von Einkerbungen auf. Durch die Einkerbung(en) kann auch erreicht werden, dass das bei einer Drehung des Drehelementes um die Drehachse erzeugte Drehmoment bei gleicher Drehgeschwindigkeit in einer Drehrichtung stärker ist als in entgegengesetzter Drehrichtung, was für einige Anwendungen von Vorteil sein kann.

Die Einkerbungen sind beispielsweise derart ausgestaltet, dass sie auf dem Steg eine sägeverzahnungsartige Struktur ausbilden. Dabei kann eine jeweilige Einkerbung einen gekrümmten oder einen kantigen Verlauf aufweisen.
Die Drehachse ist in einer Variante des Rotationsdämpfers an einem beispielsweise flanschartig ausgestalteten Grundkörper angeordnet, der Befestigungsstellen zum Befestigen an einem ersten der wenigstens zwei Teile aufweist. Auf der Drehachse ist das Drehelement aufgespritzt, so dass ein anderes der wenigstens zwei Teile über einen Führungsarm, wie beispielsweise eine Zahnstange, an das Drehelement gekoppelt werden kann.

Beispielsweise kann der Rotationsdämpfer in einer Anordnung mit wenigstens einem ersten Teil in Gestalt eines Grundkörpers und einem zweiten Teil, welches zu dem ersten Teil beweglich gelagert ist, eingesetzt werden, wobei das erste Teil über den Rotationsdämpfer mit dem zweiten Teil gekoppelt ist.

Bei der Anordnung kann es sich beispielsweise um einen wie auch immer gearteten Klappmechanismus, Schubmechanismus und/oder Hubmechanismus handeln.

Gemäß einem zweiten Aspekt der vorliegenden Erfindung wird die oben genannte Aufgabe gelöst durch ein Verfahren zum Herstellen eines Rotationsdämpfers zum Dämpfen einer Relativbewegung zwischen wenigstens zwei Teilen, das die folgenden Schritte aufweist:
- Bereitstellen einer Drehachse und
- Anordnen eines Drehelementes auf der Drehachse unter Vorspannung, so dass das Drehelement auf der Drehachse drehbar ist und bei einer Drehung des Drehelementes um die Drehachse ein der Drehung entgegenwirkendes Drehmoment erzeugt wird.

Das Verfahren des zweiten Aspektes der vorliegenden Erfindung zeichnet sich insbesondere dadurch aus, dass das Drehelement durch ein Spritzgießverfahren auf die Drehachse aufgespritzt wird.

Das Verfahren des zweiten Aspektes der vorliegenden Erfindung teilt die Vorteile des Rotationsdämpfers des ersten Aspektes der Erfindung. Das Verfahren hat bevorzugte Ausführungsformen, die den oben dargestellten Ausführungsvarianten des Rotationsdämpfers entsprechen. Beispielsweise ist es bevorzugt, dass die Drehachse und das Drehelement im Rahmen eines Mehrkomponenten-Kunststoff-Spritzgießverfahrens hergestellt werden, wobei das Drehelement auf die Drehachse aufgespritzt wird. Ferner ist es bevorzugt, dass dieses Verfahren einen weiteren Schritt des Aufschrumpfens des Drehelementes auf die Drehachse beinhaltet.

Die Drehachse wird in einer Variante des Herstellungsverfahrens als Teil eines beispielsweise flanschartig ausgestalteten Grundkörpers bereitgestellt.

Wird der Grundkörper nicht aus einem Kunststoff gefertigt, sondern beispielsweise aus einem Metall, wie beispielsweise Stahl oder Aluminium, so handelt es sich bei dem Spritzgießverfahren bevorzugt um ein Umsetzverfahren, bei dem der wie auch immer gefertigte Grundkörper in eine Spritzgießform eingelegt wird und das Drehelement auf die Drehachse aufgespritzt wird.

Der Grundkörper mit der Drehachse wird bei einer anderen Ausführungsform des Herstellungsverfahrens aus einem Kunststoff gefertigt. In dieser Variante wird der Rotationsdämpfer bevorzugt durch ein Zweikomponentenspritzgießverfahren gefertigt, bei dem zunächst, beispielsweise im Rahmen eines ersten Schusses, der die Drehachse aufweisende Grundkörper gespritzt wird und sodann, beispielsweise im Rahmen eines zweiten Schusses, das Drehelement auf die Drehachse gespritzt wird.

Das Herstellungsverfahren beinhaltet in einer Variante den Einsatz einer oder mehrerer der nachstehend genannten Techniken: Drehtischtechnik, Indexplattentechnik, Transfertechnik, Schiebertechnik und/oder Koinjektionstechnik. Grundsätzlich aber kommen sämtliche Spritzgießtechniken in Betracht.

Der der Erfindung zugrunde liegende Grundgedanke soll nachfolgend anhand der in den Figuren dargestellten Ausführungsbeispiele näher erläutert werden. Es zeigen:
- Figur 1: eine beispielhafte und schematische Darstellung eines Rotationsdämpfers;
- Figur 2: eine beispielhafte und schematische Darstellung einer erfindungsgemäßen Anordnung;
- Figur 3: eine beispielhafte und schematische Darstellung einer ersten Variante des Rotationsdämpfers;
- Figur 4: eine beispielhafte und schematische Darstellung einer zweiten Variante des Rotationsdämpfers; und
- Figur 5: eine beispielhafte und schematische Darstellung einer Querschnittsansicht einer Drehachse eines Rotationsdämpfers.

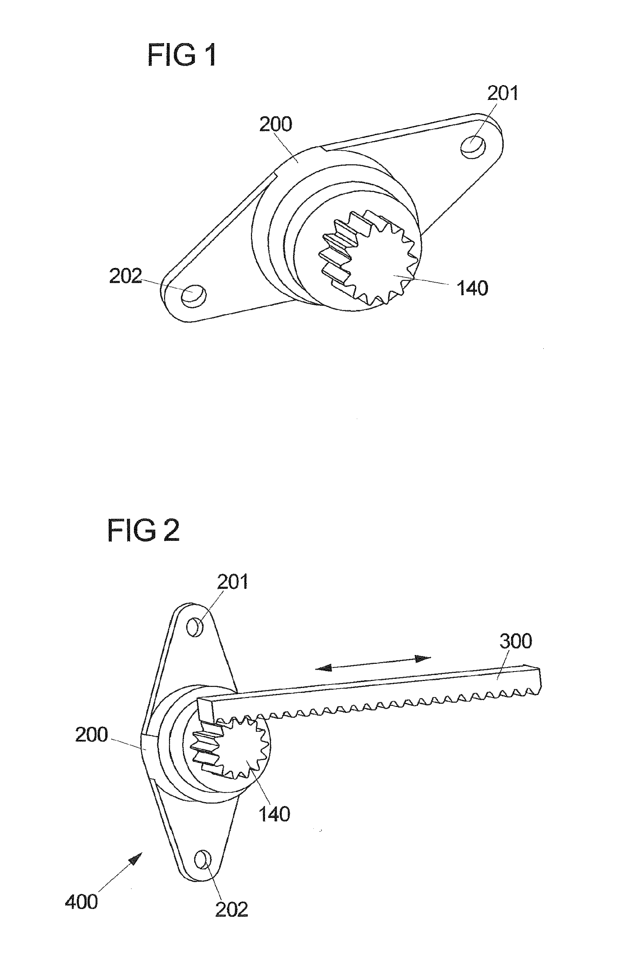

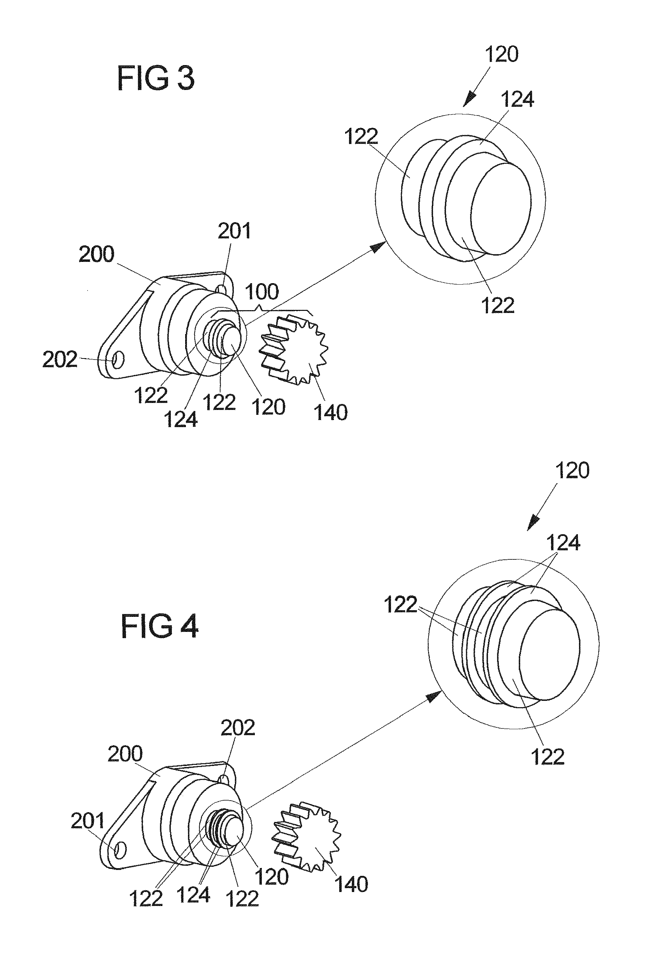

Figur 1 zeigt schematisch und exemplarisch ein erstes Teil 200 in Gestalt eines flanschartigen Grundkörpers mit zwei Befestigungsstellen 201, 202 zur Befestigung an einer Oberfläche. Das erste Teil 200 weist eine (in Figur 1 nicht sichtbare, aber beispielsweise in Fig. 3 dargestellte) Drehachse 120 auf, auf die ein Drehelement 140 in Gestalt eines Zahnrads aufgespritzt worden ist. Die Drehachse 120 und das Drehelement 140 stellen in ihrer Gemeinsamkeit einen Rotationsdämpfer dar.

Bei dem Spritzgießverfahren kann es sich um ein beliebiges Spritzgießverfahren handeln, solange es dazu geeignet ist, das Drehelement 140 derart auf der Drehachse 120 anzuordnen, dass eine Drehbarkeit des Drehelementes 140 um die Drehachse 120 gewährleistet ist, also eine nicht-starre Verbindung zwischen Drehachse 120 und Drehelement 140 hergestellt wird.

Durch ein Aufspritzen und sodann folgendes Aufschrumpfen des Drehelementes 140 auf die Drehachse 120 ist das Drehelement 140 drehbar und derart unter Vorspannung auf der Drehachse 120 angeordnet, dass bei einer Drehung des Drehelementes 140 um die Drehachse 120 ein der Drehung entgegenwirkendes Drehmoment erzeugt wird.

Der in Figur 1 dargestellte Rotationsdämpfer kann für eine Vielzahl unterschiedlicher Anwendungen eingesetzt werden, beispielsweise zum Dämpfen einer Klappbewegung, eine Schubbewegung, eine Hubbewegung usw. Beispielsweise eignet sich der dargestellte Rotationsdämpfer für einen Einsatz in einem Bargeldautomaten, Briefmarkenautomat, Kassensystem, Kopiergerät, Leergutrücknahmesystem, Möbelstück usw., insbesondere bei einer Anordnung, bei der es beispielsweise aus Service-Gründen erforderlich ist, eine Klappe, eine Tür, eine Schublade und/oder ein Modul öffnen zu können, um beispielsweise einen Papier- oder Banknotenstau zu beseitigen.

Der in Figur 1 dargestellte Rotationsdämpfer ist beispielsweise dazu geeignet, bei einer in Figur 2 gezeigten Anordnung 400 umfassend das erste Teil 200 in Gestalt des flanschartigen Grundkörpers sowie ein zweites Teil 300 in Gestalt einer Zahnstange eine durch den Doppelpfeil angedeutete Relativbewegung zu dämpfen. Die Zahnstange 300 greift in das Drehelement 140.

Beispielsweise ist das erste Teil 200 an einem Türrahmen oder Schubladenrahmen mittels der Durchbohrungen 201, 202 befestigt und die Zahnstange 300 bildet einen an der Türklappe bzw. Schubladenöffnung gekoppelten Führungsarm, der an das Drehelement 140 gekoppelt ist. Beim Öffnen/Schließen der Tür bzw. Schublade wird die translatorische Bewegung der Zahnstange 300 in eine Drehbewegung des Drehelements 140 umgesetzt, der das aufgrund der Vorspannung entstehende Drehmoment entgegenwirkt.

Das der Drehung entgegenwirkende Drehmoment wird auch dann erzeugt, wenn das Drehelement 140 ortsfest angeordnet ist und die Drehachse 120 in dem Drehelement 140 beweglich gelagert ist. Unter einer Drehung des Drehelementes 140 um die Drehachse kann also insbesondere auch ein Drehen der Drehachse 120 bei einem Stillstand des Drehelementes 140 verstanden werden oder eine gleichzeitig Drehung des Drehelementes 140 und der Drehachse 120. In allen Fällen wird aufgrund der Vorspannung ein der jeweiligen Drehung entgegenwirkendes Drehmoment bzw. Bremsmoment erzeugt; es kommt allein auf die Relativbewegung zwischen der Drehachse 120 und dem Drehelement 140 an.

Bei dem Drehelement 140 handelt es sich beispielsweise um ein Kunststoffdrehelement, das durch ein Kunstspritzgießverfahren auf die Drehachse 120 aufgespritzt worden ist, wobei in Abhängigkeit des gewünschten betragsmäßigen Wertes des dämpfenden Drehmoments das Material der Drehachse 120 einerseits und des Drehelements 140 andererseits gewählt wird.

Das Drehelement 140 und/oder die Drehachse 120 bestehen beispielsweise aus einem oder mehreren der folgenden Kunststoffe: Thermoplastisches Polyurethan, wie beispielsweise TPU 95 Shore A oder Desmopan 3072 D; Polyurethan-Elastomer, wie beispielsweise Elastollan C59 D53; Thermoplastisches Elastomer, wie beispielsweise TPE_E 55 Shore D oder TPE_E 63 Shore D; Polyamid, wie beispielsweise PA 6 GF 30.

Durch den Einsatz bestimmter Materialien sowie durch die Dimensionierung der Drehachse 120 und des Drehelements 140 sowie durch die Vorspannung zwischen dem Drehelement 140 und der Drehachse 120 kann ein Drehmoment einer gewünschten Stärke eingestellt werden. Die Reibpaarung zwischen dem Drehelement 140 und der Drehachse 120 bestimmt hierbei den zwischen dem Drehelement 140 und der Drehachse 120 wirkenden Reibungskoeffizienten (auch als Reibzahl bezeichnet). Je höher der Reibungskoeffizient bzw. die Reibungszahl, desto höher ist das Drehmoment, das bei einer Drehung des Drehelements 140 um die Drehachse erzeugt wird und der Drehung entgegenwirkt.

Das der Drehung entgegenwirkende Drehmoment liegt beispielsweise zwischen 1 Ncm und 500 Ncm. Der betragsmäßige Wert des Drehmoments kann aber auch je nach Anwendung und Einsatzbereich durch entsprechende Materialwahl und/oder Dimensionierung des Rotationsdämpfers auch auf deutlich darüber oder darunter liegende Werte eingestellt werden.

Die Vorspannung wird bevorzugt durch definiertes Aufschrumpfen des Drehelementes 140 auf die Drehachse eingestellt. Dazu wird der Rotationsdämpfer einer bestimmten Temperatur ausgesetzt, die bei entsprechender Materialwahl dazu führt, dass das Drehelement 140 gegenüber der Drehachse 120 schrumpft. Der Grad der Vorspannung kann dabei durch den Aufschrumpfungsgrad, also insbesondere durch die Höhe der Temperatur und die Zeit, die der Rotationsdämpfer der erhöhten Temperatur ausgesetzt ist, angepasst werden.

Die Figuren 3 und 4 zeigen zwei Varianten eines Rotationsdämpfers 100, bei denen auf der Drehachse 120 Aussparungen 122 vorgesehen sind, die einen oder mehrere Stege 124 ausbilden. Die Aussparungen 122 weisen eine umlaufende, nutenartige Form auf, so dass angrenzende, ringförmig an der Drehachse 120 umlaufende Stege 124 gebildet werden. Abhängig davon, welchen betragsmäßigen Wert das Drehmoment, das der Drehung entgegenwirkt, haben soll, kann die Anzahl der umlaufenden Stege bzw. die Anzahl der umlaufenden Aussparungen gewählt werden.

Zur Erzielung eines vergleichsweise starken Drehmoments ist es von Vorteil, wenn mehrere, z.B. zwei umlaufende Stege 124, wie in Figur 4 dargestellt, vorgesehen sind.

Dadurch ist die Kontaktfläche zwischen dem Drehelement 140 und der Drehachse 120 größer, womit die Reibung und somit das der Drehung entgegenwirkende Drehmoment erhöht wird. Es kann jedoch auch, wie bei dem Ausführungsbeispiel gemäß Figur 3, ein Steg 124 ausreichend sein.

Für das zwischen dem Drehelement 140 und der Drehachse 120 dämpfend wirkende Drehmoment spielt neben den soeben erwähnten geometrischen Eigenschaften des Drehelementes 140 bzw. der Drehachse 120 und der entsprechenden Materialwahl auch die zwischen dem Drehelement 140 und der Drehachse 120 insbesondere radial wirkende Vorspannung eine wesentliche Rolle, die beispielsweise durch einen zusätzlichen Aufschrumpfungsschritt des Drehelements 140 auf die Drehachse 120 nach dem Aufspritzen eingestellt wird. Hierbei kann die Vorspannung durch die Dauer des Aufschrumpfvorgangs sowie die dabei herrschende Temperatur eingestellt werden.

Die in Figur 3 und 4 gezeigten Beispiele veranschaulichen, dass eine Vielzahl von Freiheitsgraden zur Verfügung steht, um gewünschte Eigenschaften des Rotationsdämpfers einzustellen. Die dämpfende Wirkung des Rotationsdämpfers wird bestimmt durch die Konstruktion und Dimensionierung des Drehelements 140 einerseits und der Drehachse 120 andererseits sowie die Materialvorauswahl und die eingestellte Vorspannung.

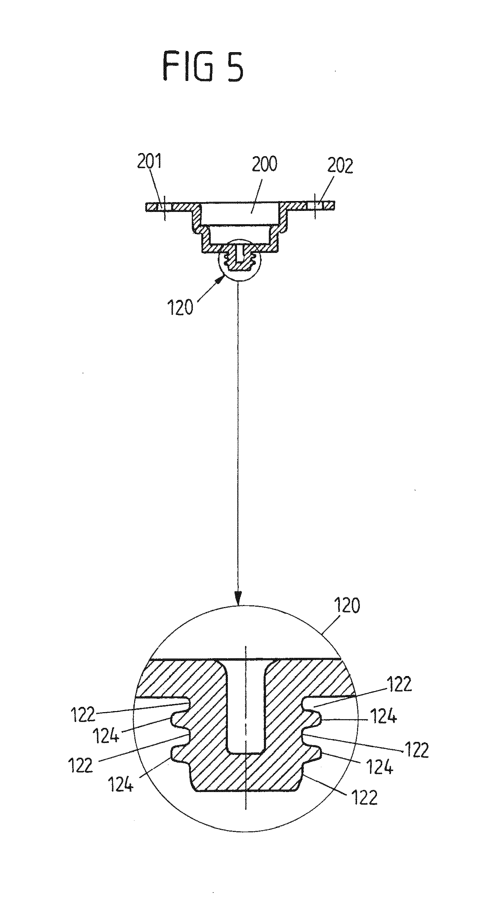

Die Figur 5 zeigt schematisch und exemplarisch eine Querschnittsansicht der Drehachse 120. Die Drehachse 120 kann beispielsweise einstückig mit einem Grundkörper 200 als Kunststoffspritzgießteil hergestellt werden. Die vergrößerte Darstellung der Querschnittsansicht der Drehachse 120 zeigt deutlich die drei umlaufenden Aussparungen 122, die zwei umlaufende Stege 124 ausbilden.

### Bezugszeichenliste

- 100: Rotationsdämpfer
- 120: Drehachse
- 122: Umlaufende Aussparungen
- 124: Umlaufender Steg

- 140: Drehelement

- 200: Erstes Teil
- 201, 202: Befestigungsstelle

- 300: Zweites Teil

- 400: Anordnung

## Patentansprüche

1. Rotationsdämpfer (100) zum Dämpfen einer Relativbewegung zwischen wenigstens zwei Teilen (200, 300), aufweisend
- eine Drehachse (120) und
- ein Drehelement (140), das auf der Drehachse drehbar und derart unter Vorspannung angeordnet ist, dass bei einer Drehung des Drehelementes um die Drehachse ein der Drehung entgegenwirkendes Drehmoment erzeugt wird,
**dadurch gekennzeichnet, dass**
- das Drehelement (140) durch ein Spritzgießverfahren auf die Drehachse (120) aufgespritzt ist.

2. Rotationsdämpfer (100) nach Anspruch 1, wobei das Drehelement (140) zum Kontaktieren eines der wenigstens zwei Teile (300) auf einer der Drehachse abgewandten Oberfläche eine radial nach außen weisende Haftbeschichtung aufweist.

3. Rotationsdämpfer (100) nach Anspruch 1 oder 2, wobei das Drehelement ein Rad (140), wie beispielsweise ein Zahnrad, ist.

4. Rotationsdämpfer (100) nach einem der vorstehenden Ansprüche, wobei das Drehelement (140) ein Kunststoffdrehelement ist und durch ein Kunststoffspritzgießverfahren auf die Drehachse (120) aufgespritzt ist.

5. Rotationsdämpfer (100) nach einem der vorstehenden Ansprüche, wobei das Rad (140) und/oder die Drehachse (120) aus einem oder mehreren der folgenden Kunststoffe besteht: Thermoplastisches Polyurethan, wie beispielsweise TPU 95 Shore A oder Desmopan 3072 D; Polyurethan-Elastomer, wie beispielsweise Elastollan C59 D53; Thermoplastisches Elastomer, wie beispielsweise TPE_E 55 Shore D oder TPE_E 63 Shore D; Polyamid, wie beispielsweise PA 6 GF 30.

6. Rotationsdämpfer (100) nach einem der vorstehenden Ansprüche, wobei die Drehachse (120) und das Drehelement (140) durch ein Mehrkomponenten-Spritzgießverfahren hergestellt sind.

7. Rotationsdämpfer (100) nach einem der vorstehenden Ansprüche, wobei das Drehelement (120) derart unter Vorspannung auf der Drehachse angeordnet ist, dass bei einer Drehung des Drehelementes um die Drehachse ein Drehmoment erzeugt wird, das der Drehung in beide Drehrichtungen im Wesentlichen gleichsam entgegenwirkt.

8. Rotationsdämpfer (100) nach einem der vorstehenden Ansprüche, wobei die Vorspannung durch Aufschrumpfen des Drehelementes auf die Drehachse eingestellt ist.

9. Rotationsdämpfer (100) nach einem der vorstehenden Ansprüche, wobei die Drehachse (120) zur Aufnahme des Drehelementes (140) mindestens eine umlaufende Aussparung (122) und mindestens einen axial an die Aussparung (122) angrenzenden Steg (124) aufweist.

10. Rotationsdämpfer (100) nach einem der vorstehenden Ansprüche, wobei die Drehachse (120) an einem flanschartigen Grundkörper angeordnet ist, der Befestigungsstellen (201, 202) zum Befestigen an einem ersten der wenigstens zwei Teile aufweist.

11. Anordnung (400) mit wenigstens einem ersten Teil (200) in Gestalt eines Grundkörpers und einem zweiten Teil (300), welches zu dem ersten Teil beweglich gelagert ist,
**dadurch gekennzeichnet, dass**
das zweite Teil (300) über einen Rotationsdämpfer (100) nach einem der vorstehenden Ansprüche an den ersten Teil (100) gekoppelt ist.

12. Verfahren zum Herstellen eines Rotationsdämpfers (100) zum Dämpfen einer Relativbewegung zwischen wenigstens zwei Teilen (200, 300), aufweisend die Schritte:
- Bereitstellen einer Drehachse (120) und
- Anordnen eines Drehelementes (140) auf der Drehachse (120) unter Vorspannung, so dass das Drehelement (140) auf der Drehachse (120) drehbar ist und bei einer Drehung des Drehelementes (140) um die Drehachse (120) ein der Drehung entgegenwirkendes Drehmoment erzeugt wird,
**dadurch gekennzeichnet, dass**
das Drehelement (140) durch ein Spritzgießverfahren auf die Drehachse (120) aufgespritzt wird.
